(19) Europäisches Patentamt / European Patent Office / Office européen des brevets

(11) **EP 4 196 764 B1**

(12) **EUROPEAN PATENT SPECIFICATION**

(45) Date of publication and mention
of the grant of the patent:
**06.08.2025 Bulletin 2025/32**

(21) Application number: **22721639.7**

(22) Date of filing: **15.04.2022**

(51) International Patent Classification (IPC):
**G01N 15/02** (2024.01)    **G01N 15/06** (2024.01)
**G01N 21/84** (2006.01)    **G01N 21/31** (2006.01)

(52) Cooperative Patent Classification (CPC):
**G01N 15/06; G01N 15/0205; G01N 21/31;**
**G01N 21/85; G01N 21/94;** G01N 15/075;
G01N 21/41; G01N 2015/0053; G01N 2015/0687;
G01N 2021/3129; G01N 2201/0697

(86) International application number:
**PCT/BG2022/050002**

(87) International publication number:
**WO 2023/279176 (12.01.2023 Gazette 2023/02)**

(54) **METHOD AND DEVICE FOR EVALUATING THE CONCENTRATION, MATERIAL AND SIZE OF MICROPLASTICS IN AQUEOUS MEDIUM**

VERFAHREN UND VORRICHTUNG ZUR BESTIMMUNG DER KONZENTRATION, DES MATERIALS UND DER GRÖSSE VON MIKROKUNSTSTOFFEN IN WÄSSRIGEM MEDIUM

PROCÉDÉ ET DISPOSITIF D'ÉVALUATION DE LA CONCENTRATION, DU MATÉRIAU ET DE LA TAILLE DE MICROPLASTIQUES DANS UN MILIEU AQUEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.07.2021 BG 11339721**

(43) Date of publication of application:
**21.06.2023 Bulletin 2023/25**

(73) Proprietor: **Aqua Lid Ood**
**6600 Kardzhali (BG)**

(72) Inventors:
• **FILIPOV, Dimitar Boykov**
**1330 Sofia (BG)**
• **POPOV, Petar Georgiev**
**1000 Sofia (BG)**

(74) Representative: **Pakidanska, Ivanka Slavcheva**
**6, Trapezitsa St., fl.1, office 4**
**1000 Sofia (BG)**

(56) References cited:
**DE-A1- 10 023 000**

• **KANYATHARE BONIPHACE ET AL: "Optical transmission spectra study in visible and near-infrared spectral range for identification of rough transparent plastics in aquatic environments",** CHEMOSPHERE, PERGAMON PRESS, OXFORD, GB, vol. 248, 30 January 2020 (2020-01-30), XP086118799, ISSN: 0045-6535, [retrieved on 20200130], DOI: 10.1016/J.CHEMOSPHERE.2020.126071

# EP 4 196 764 B1

**Description**

TECHNICAL FIELD

The invention relates to a method and apparatus for evaluating the concentration, material and size of microplastics in aqueous medium in real time.

The invention is used in environmental management and protection of the health of the population by a quick and efficient monitoring of presence and concentration of microplastics in aqueous medium.

STATE OF ART

Microplastic pollution is one of the most serious challenges facing humanity in the last 20 years. By microplastics is meant solid particles of various polymeric substances with a size of 1 $\mu$m to 5 mm. The growing volume of plastics produced worldwide makes the problem more and more relevant and serious. According to research publications, the concentration of microplastics in open, natural aquatic environments can reach 10,000 particles per m$^3$, and the main amount of microplastic particles in water basins (rivers, lakes, seas) is with a size between 70 $\mu$m and 500 $\mu$m. Microplastic pollution has a number of specifics. On the one hand, it is the low rate of degradation of polymers in the natural environment. On the other hand, plastics age and in the aging process microparticles less than 5 mm in size are realized and spread into the soil and through wind and rain most of them fall into the air and water. Thirdly, the small size of the particles makes it difficult to remove them and facilitates their entry directly or indirectly into the human body. Particularly negative is the impact of the pollution with microplastic of open water basins - rivers, lakes, seas, oceans. Except through drinking and cooking water, microplastics enter the human body through fish, as well as through agricultural products irrigated with water contaminated with microplastics.

This raises the need for a method and device for fast, easy and reliable evaluating of the concentration of microplastics in the water and of their characteristics - size and material.

Currently, the pollution control of water basins with microplastics is generally performed by executing the following sequential actions and processes:

- Sampling on spot;
- Storage of samples;
- Transportation of samples to the laboratory;
- Separation of microplastics in the samples by known methods, density separation is most often applied;
- Filtration;
- Quantitative analysis - the number of particles and their size are determined visually by microscope or by specialized software;
- Qualitative analysis - the material of the microplastic particles is determined by spectroscopic analysis, FTIR (Fourier-Transform InfraRed) is most often used;
- The concentration of microplastic particles is determined on the basis of the total volume of samples collected at the test spot.

The method thus described is slow, laborious, complex and expensive, especially in the case of large-scale surveys in remote and/ or open water sources. Costs are high even in well-designed industrial and civil water infrastructures, as the process requires highly qualified staff and highly specialized expensive equipment. In addition, human intervention is indispensable at every stage which leads to the risk of accumulation of random and systematic errors which statistical analysis is difficult to remove.

KANYATHARE BONIPHACE ET AL in "Optical transmission spectra study in visible and near-infrared spectral range for identification of rough transparent plastics in aquatic environments", CHEMOSPHERE, PERGAMON PRESS, OXFORD, GB, vol. 248, 30 January 2020 (2020-01-30), ISSN: 0045-6535, DOI: 10.1016/J.CHEMOSPHERE.2020.126071' reveals results of a study of the optical properties such as dispersion and absorption of both plastics and water in the VIS-NIR spectra range, transmission and scattering of light by plastic sheets. In particular, the paper studies the influence of the surface roughness of microplastic particles on the absolute values of light transmittance and the role of light scattering which consequently affects the amount of the light transmitted through plastics embedded in water. The paper reveals results of a study of the optical properties - dispersion and absorption of both water and plastic sheet samples of different known polymer substances (PA, PET, PP, PS) with known thickness in the VIS-NIR spectra range, and transmission and scattering of light by the plastic sheets. The samples are preliminary treated with sandpaper in order to achieve different surface roughness. In particular, the above cited document studies the influence of the surface roughness of microplastic particles on the absolute values of light transmittance, the role of light scattering on plastics embedded in water, and the influence of the refractive index ratio of plastics and water. The wavelength-dependent refractive index of plastic samples are measured using ellipsometer (J.A. Woollam V-VASE) and the wavelength-dependent refractive index of water is extrapolated using the Partigton's formula. The samples are placed in a 1mm optical cuvette, the transmittance is measured with a conventional spectrometer Perkin Lambda 9 operating in the VIS-NIR spectral range, and the absorbance of the respective sample is calculated using the relation $A=\log(1/T)$. It is found that the intrinsic absorption coefficient in the VIS-NIR region cannot be used to categorize the samples (PE and PP). It is also found that the wavelength-dependent refractive index is different for each plastic type and higher than that of water, so it could be used as one possible method for ranking the different plastic type. The paper does not disclose the steps of the method and how it can be applied in open water basins in real time. Also, the paper does not disclose a method for evaluation of concentration and size of the microplastic particles in open water basins.

DE10023000A1 discloses a device for evaluating the concentration of a known substance (dust, dirt, gas bubbles) in the presence of interfering substance in a measurement zone comprising a source of electromagnetic emission generating a beam with two waves of different length $\lambda_1$ and $\lambda_2$ wherein $\lambda_1$ is in the range 220-320 nm and $\lambda_2$ is in the range 400 -700 nm. The beam irradiates the measurement zone with length L confined between optical glasses. The device also contains a means for directing a water flow to the measurement zone and an input and output optical systems located respectively at the entry and at the exit of the measurement zone. The input optical system comprises a beam splitter and two filters at the entry capable to transmit only the designated wavelength arranged in the direction of the respective beams. The input optical system is connected to an input measuring block including two input detectors for measuring the intensity $I_o$ emitted by the light source. The output optical system comprises a beam splitter and two filters at the exit arranged in the direction of the respective beams. The output optical system is connected to an output measuring block including output detectors for measuring the intensity I on the other side of the measuring zone. The input and output detectors are connected to the computing device. By measuring the intensity of light transmitted through the sample and a reference beam the concentration is evaluated by the relation $C = 1 / \varepsilon L. \log(I_{UV(0)}/I_{UV})$; where $I_{UV(0)}$ is the intensity of the reference signal and $I_{UV}$ is the intensity of the sample signal for the UV spectral range wavelength. This ratio is corrected with a ratio $(I_{vis(0)}/I_{vis}$ for the interfering media in the visible spectrum.

The device is meant to measure the concentration of hydrogen peroxide or ozone. It is not suitable for evaluating the concentration of microplastic particles in open aquatic environments because it can evaluate concentration only of known substances with a significant measurable absorbance in UV spectrum dissolved in interfering media with predominant absorbance in visible spectrum. Besides, this device cannot evaluate the size of the particles.

WO2017220249A1 discloses a method and device for detecting microparticles in a fluid flow and evaluating the material. The method is based on the comparison of the difference in the attenuation time of the induced fluorescence at different polarization, which is unique for each material, with known and controlled in advance polarization of the radiation in a specific spectrum. The disclosed device operating by the method includes a means for generating fluid flow and a pulsed laser emitting coherent electromagnetic radiation with a specific polarization and wavelength suitable for inducing fluorescence in the microparticles in the flow. The laser beam is directed toward a measurement zone in the fluid flow. The cross section of the measurement zone is determined by the cross section of the beam. An optical system located at the entry of the measurement zone polarizes the laser beam in a specific direction of polarization. A second optical system, located at the exit of the measurement zone redirects the already passed beam to pass through the measurement zone again but in a different direction of polarization. The device also includes first and second spectrometers, which determine the parameters of the induced fluorescence in the molecules of the particles in the flow created by the two polarizations, and the parameters of the pulse, respectively. In particular, the intensity of different wavelengths for different directions of polarization over time is measured. The spectrometers are connected to a data Acquisition and processing device, which according to a preset mathematical model evaluates the difference in the time for attenuation of the induced fluorescence for different polarization. By comparing the survey data with data of previously known or previously generated and controlled polarization of the radiation and the spectrum of this fluorescence, the material of the solid particles in the fluid is evaluated. The disclosed method and device make it possible to detect the presence of solid particles and to evaluate their material but only if fluorescence can be induced in them in the range of wavelengths emitted by the source. For some types of materials, including plastics, it is impossible to induce fluorescence at the wavelengths used for each specific laser used. In addition, the concentration and size of the microparticles cannot be evaluated by this method and device.

The method is not suitable for use in unmodified aquatic medium, as parasitic fluorescence of unavoidable organic impurities in the environment (rivers, lakes, seas) reduces the accuracy and reliability of the results. Beside, the method is complex, time consuming, requires highly qualified personnel and specialized laboratory equipment.

DISCLOSURE OF INVENTION

The task of the invention is to provide a fast, easy and at the same time sufficiently accurate and reliable method for in-situ evaluating the concentration, material and size of microplastic particles in an aqueous medium in real time. Another task of the invention is to provide a device working by the method which is easy to operate and maintain, does not require highly qualified personnel, can work on spot and gives real-time results about the concentration of microplastics in

EP 4 196 764 B1

the medium and the size and material of the microparticles.

This problem is solved by the proposed method and device for evaluating the concentration, material and size of microplastics in aqueous medium.

The method includes the following operations in the given sequence:

- a fluid flow W is created at a constant known speed in the studied aqueous medium;
- a measurement zone is created in the flow W, representing a virtual cylinder with diameter $d_b$ and length L formed by a laser beam F directed towards the flow W. The measurement zone includes a first part with length $L_1$, where $1500 \geq L_1 \geq 500$ mm, and a second part with length $L_2 \geq 400$ mm, wherein the volume of said first part of the measurement zone is defined on the basis of maximum expected concentration of microplastics in natural basins of 10000 particles/m$^3$, so that no more than 3 microparticles within one second pass through the measurement zone.
- part of the water in flow W is filtered with a coarse filter retaining particles above 5 mm and directed to the first part of the measurement zone, and the rest of the water in flow W is filtered with a fine filter retaining particles above 10 $\mu m$ and fed in the second part of the measurement zone.
- the measurement zone is continuously irradiated with a pulsed laser beam F with a diameter $d_b$;
- each pulse of the laser beam F contains n number of waves of different length $\lambda_i$, where $n \geq 2$, and $1 \leq i \leq n$ in the range 300-800 nm, the length of each pulse is less than 100 ns, and the frequency of pulse repetition is at least 10 kHz.
- at the entry of the measurement zone the laser beam F is split into two beams with identical characteristics and a predetermined power ratio - a measurement beam $F_M$, which passes through the measurement zone, and a reflected beam F';
- the reflected beam F' is split within each pulse to its constituent waves $\lambda_i$ and at least one measurement of the input power $P_{0i}$ is done in each pulse for each wavelength $\lambda_i$.
- at the exit of the measurement zone the measuring beam $F_M$ is split within each pulse to its constituent wavelengths $\lambda_i$ and within each pulse at least one measurement of the transmitted power $P_{ti}$ is done for each wavelength $\lambda_i$;
- the obtained temporary values for input power $P_{0i}$ and transmitted power $P_{ti}$ are fed to a data acquisition and processing device;
- on the basis of the obtained temporary values for the $P_{ti}/P_{oi}$ ratio in the absence of a microparticle, the absorption coefficient $K_{awi}$ for the aqueous medium in the measurement zone is determined at least once in each pulse for each every single wavelength.
- the determined value for $K_{awi}$ is recorded in the data acquisition and processing device and updated over a certain period of time T;
- on the basis of the temporary values from the measurements for $P_{ti}$, $P_{0i}$ and the determined value for $K_{awi}$ by applying a predefined mathematical model, temporary values of the ratio $A_{ij}$ between the total coefficients of extinction $Q_{ext}(\lambda_i)$ and $Q_{ext}(\lambda_j)$ are determined at least once in each pulse for each wavelength of each individual pair of waves of different length $\lambda_i$, wherein the total number of ratios $A_{ij}$ is k, where $k = n(n-1)/2$, $1 \leq j \leq n$, $i \neq j$.
- The complex refractive index $m = n_r - i.k_r$ is determined empirically in advance, where $n_r$ and $k_r$ are respectively the real and imaginary component for the most common plastic substances for the wavelengths $\lambda_1$ used, and under a predefined mathematical model calibration values for $A_{ij}$ are calculated for the respective pairs of wavelengths of the chosen range for particles of a specific material and size, which are recorded in the data acquisition and processing device;
- by comparing the obtained temporary values for $A_{ij}$ for the microplastic particles passed through the measurement zone with the recorded calibration values for $A_{ij}$, the presence of microplastic particles of a specific material and with a specific size is determined;
- the results of the comparisons are recorded in real time in the data acquisition and processing device and after subsequent statistical processing and analysis serve as calibration values for subsequent comparisons.
- After completing the survey of the specific aquatic medium, the concentration of microparticles in the medium is evaluated under a predefined algorithm on the basis of the flow speed W, the geometric parameters of the measurement zone and the stored results of the comparisons between the temporary and the calibration values for $A_{ij}$.

The length $L_2$ is chosen to be at least an order and a half bigger than the maximum size of the microplastic particles, so that the detectors measuring the transmitted power work in a far-filed regime.

The spectral range is chosen with a view to the optical properties of water and polymers, and in particular, with a view to the complex refractive index m, so to ensure a measurable difference in the absorption of both water and the most frequently used plastic substances for different wavelengths emitted by the laser source.

For particles bigger than 50 $\mu m$ for the spectral range thus selected, the interaction of the microplastic particles in aqueous medium is described with sufficient accuracy by the Geometric Optics Approximation (GOA).

The method is based on the specific absorption of plastics, and in particular, on the fact that the dispersion of the complex refractive index m is unique for each specific type of material, and that the dispersion of the absorption coefficient $K_a$ is characterized by measurable differences for different polymeric substances.

Preferably, the wavelength $\lambda_i$ is in the range 450-750 nm.

When reducing the diameter $d_b$ of the beam F, the accuracy and reliability of the measurement results increase also for microparticles with very small dimensions - less than 100 $\mu$m. This is because the ratio of the transmitted power to the input power $P_t/P_o$ is a function of the ratio of the cross-sectional area of the microparticle to the cross-sectional area of the beam $S_p/S_F$. The closer the ratio $S_p/S_F$ to 1, the more accurate is the measurement at the same sensitivity of the detectors used.

Preferably the diameter $d_b$ of the beam F is less than or equal to 6 mm.

The accuracy of the method is rising with increasing the number of waves of different lengths in the determined range as the greater the number of waves of different lengths, the greater the number of temporary values of $A_{ij}$, and hence the greater the number of comparisons with the recorded calibration values of $A_{ij}$.

Increasing the number of measurements within a single pulse also increases the accuracy and reliability of the method. It is preferable to perform at least ten measurements of the input power $P_{oi}$ and the transmitted power $P_{ti}$, respectively, for each wavelength $\lambda_i$ within one pulse.

The time T for updating the value of the absorption coefficient of water $K_{awi}$ depends on the expected change in the optical properties of the medium and the desired accuracy of the results. It is recommendable the update to be performed as often as possible. It is preferable $K_{awi}$ to be updated every second or at shorter intervals, even within each pulse.

In a variant of the method according to the invention the measuring beam $F_M$ is split into two parallel beams $F_M'$ and $F_R$ with identical geometric characteristics and with a predetermined power ratio within each pulse, where the beam $F_M'$ passes through the measurement zone and the beam $F_R$ passes through a reference zone in the flow W which has the same geometric characteristics as the measurement zone.

Before entering the reference zone the water flow W is filtered through a second fine filter to remove particles above 10 $\mu$m.

At the entry and exit of the reference zone the input power and the transmitted power in the reference zone $P_{Roi}$ and $P_{Rti}$ are measured at least once per pulse, the results are submitted to the data acquisition and processing device and serve to calculate the absorption coefficient of the aquatic medium $K_{awi}$ for each wavelength.

Created is also a device for determining the concentration, material and size of microplastics in aqueous medium working after the proposed method. The device includes a means for generating fluid flow W with a constant speed provided with a speed sensor for measuring the flow speed, and a source of pulsed coherent electromagnetic emission generating a pulsed laser beam F with a diameter $d_b$ consisting of n in number waves of different lengths $\lambda_i$, where $1 \leq i \leq n$ and $n \geq 2$, in the range 300-800 nm. The length of each pulse is $\leq 100$ ns and the pulse repetition frequency is $\geq 10$ kHz. The laser beam F is directed towards the water flow W forming in it a measurement zone in a form of a virtual cylinder with a length L and a diameter of the base $d_b$. The measurement zone consists of a first part with a length $L_1$ in the range 500 -1500 mm, and a second part with a length $L_2 \geq 400$ mm. The device also includes a coarse filter retaining particles above 5 mm, and a fine filter retaining particles above 10 $\mu$m, which are located in the flow W immediately in front of the first part and of the second part of the measurement zone, respectively. An input optical system is arranged at the entry of the measurement zone, and an output optical system - at the exit of the measurement zone. The input optical system includes a beam splitter and n-1 in number dichroic mirrors at the entry arranged one after the other in the direction of the beam F' which is reflected in the beam splitter. The input optical system is connected to an input measuring block including input detectors for measuring the input power $P_{0i}$. The output optical system includes n-1 in number dichroic mirrors at the exit and is connected to an output measuring block, which includes output detectors for measuring the output power $P_{ti}$. The input measuring block, the output measuring block and the speed sensor are connected to a data acquisition and processing device.

For the parameters thus defined the size parameter $x = 2.\pi.a/\lambda > 140$, where $\alpha$ is a characteristic size of the microparticle, which excludes scattering in the direction of the output measuring block, respectively excludes this component in the value of the transmitted power $P_{ti}$.

In addition, the location of the optical system alongside the axis of the beam F and the long optical path between the microparticle and the output detectors also precludes the possibility to measure scattered emission.

In a variant embodiment of the device according to the invention, the input optical system comprises a second beam splitter and a 100% reflective mirror. The second beam splitter splits the beam $F_M$ which has passed through the first beam splitter into two beams $F_M'$ and $F_R$ with identical geometric characteristics and a predetermined power ratio, wherein the beam $F_M'$ passes through the measurement zone and the beam $F_R$ is reflected in the 100% reflecting mirror and irradiates the flow W forming in it a reference zone with diameter $d_b$ and length L, and said reference zone is located between the input optical system and the output optical system after the measurement zone in the direction of water flow W. Between the measurement zone and the reference zone there is a second fine filter retaining particles above 10 $\mu$m.

The data acquisition and processing device may have a display for visualizing the information in a proper way. It is possible that workstations are connected interactively to the data acquisition and processing device allowing the results of the monitoring survey data to be displayed in a proper form, and allowing to enter empirical data for the complex refractive index m for new types of polymeric materials, as well as empirically determined calibration values for $A_{ij}$ for the respective pairs of wavelengths in the selected spectral range for particles of specific material and size. The data acquisition and processing device may contain a transmission block including at least one communication module like LAN, GSM, GPRS, 3G, SMS, VHF, UHF.

Preferably, the length $L_1$ is within the range 600 - 1200 mm and the length $L_2$ is greater than 500 mm.

The means for directing the water flow can be in the form of a funnel or a pipe with a rectangular cross section. The means for directing the water flow can be detachable to facilitate the transportation of the device according to the invention to the chosen survey location.

The proposed method allows to determine in a quick and easy way the number, size and material of plastic microparticles, as well as the concentration of microplastics in aqueous medium in real time in situ. The results obtained are of good accuracy and reliability which can be further improved if necessary. The device is easy to service and maintain and does not require special qualification of the service staff. It can be transported by car and carried by hand over short distances.

This makes the device universally applicable in survey, monitoring and control of microplastic pollution in natural water basins and water infrastructures. These advantages make it particularly suitable and effective in the surveys of microplastic contamination of large and/ or remote water basins. The data can be transmitted in real time and used as a basis for operative decisions related to environmental management and protection of people's life and health.

BRIEF DESCRIPTION OF DRAWINGS

Figure 1 is a schematic diagram of an exemplary embodiment of a device according to the invention;

Figure 2 is a schematic diagram of an input optical system and an input measuring block of the device of Figure 1;

Figure 3 is a schematic diagram of an output optical system and an output measuring block of the device of Figure 1;

Figure 4 is a schematic diagram of a variant embodiment of a device according to the invention;

Figure 5 is a schematic diagram of an input optical system and an input measuring block of the device of Figure 4;

Figure 6 is a schematic diagram of an output optical system and an output measuring block of the device of Figure 4;

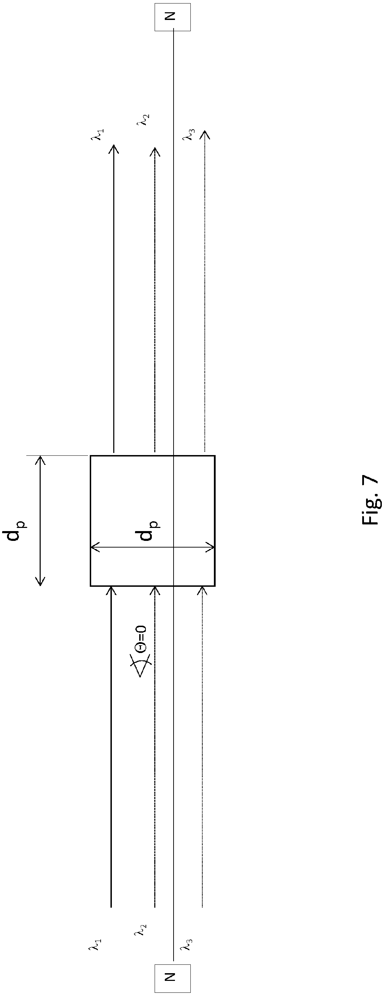

Figure 7 is a side view of a conditional equivalent particle irradiated along the normal to the base.

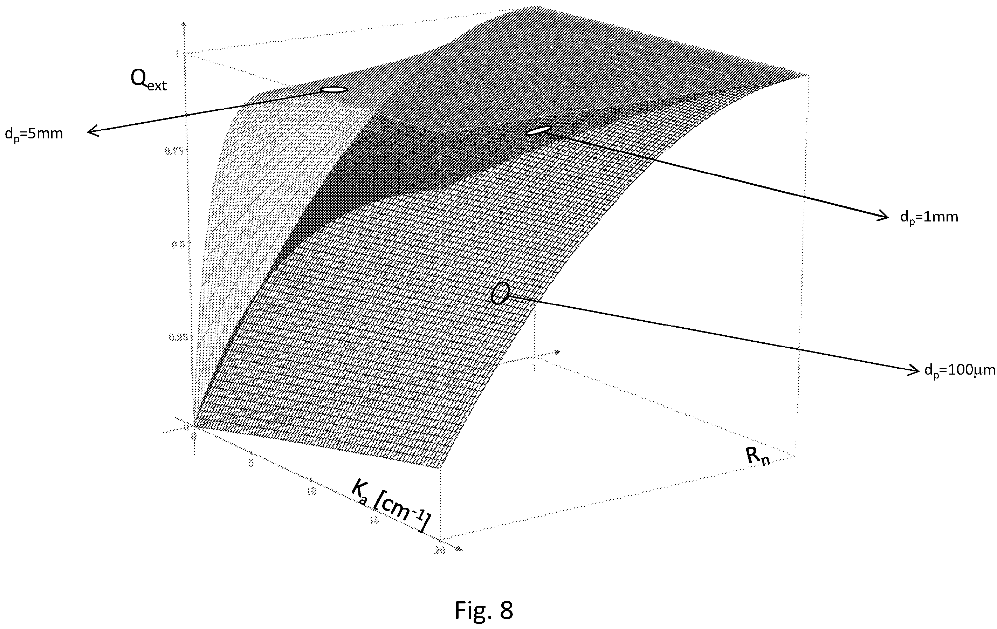

Figure 8 is a 3D diagram of the relation between the coefficients of extinction in aqueous medium $Q_{ext}$, the absorption coefficient $K_a$ and the reflection coefficient $R_n$ for different materials in the determined wavelength range for three different particle sizes;

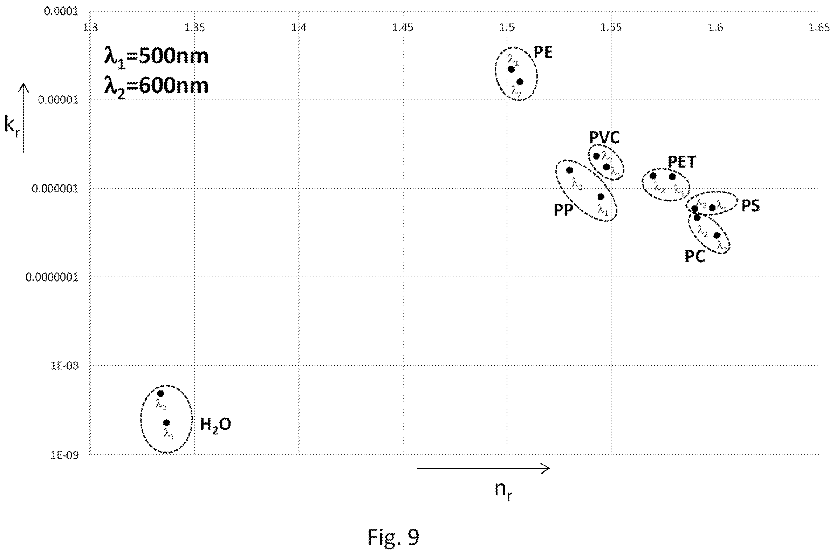

Fig. 9 is a diagram of the typical distribution of $n_r$ and $k_r$ for the most widely used materials for $\lambda_1 = 500$nm и $\lambda2 = 600$ nm.

DESCRIPTION OF EMBODIMENTS

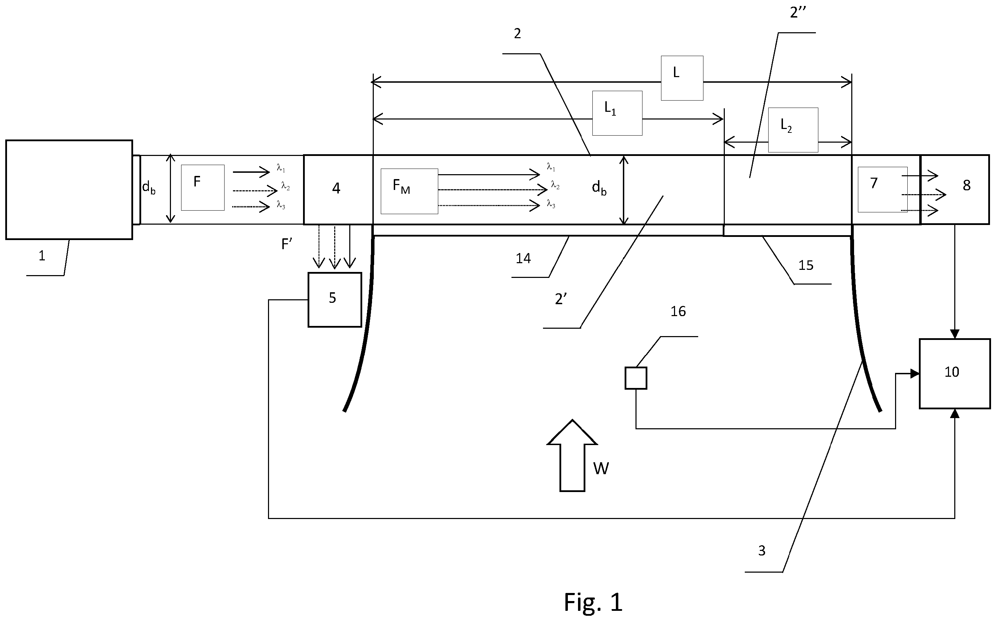

Figures 1-3 illustrate an exemplary embodiment of the method and device according to the invention. The device includes a pulsed laser 1 generating a pulse laser beam F and a known means 3 for generating a fluid flow W with a constant speed, for example a funnel with an adaptable variable cross section in which there is a speed sensor 16 for measuring the speed of the flow W. In this embodiment the laser beam F is with a diameter $d_b = 6$ mm and emits simultaneously in each pulse three waves of different lengths $\lambda_1$, $\lambda_2$ and $\lambda_3$ within the spectral range of 450-800 nm, where the length of each pulse is 100 ns and the pulse repetition frequency is 10 kHz. The laser beam F irradiates the water flow W, forming in it a measurement zone 2, representing a virtual cylinder with a length L and a diameter of the base 6 mm. The measurement zone 2 consists of two parts, in this embodiment the first part 2' is with length $L_1 = 700$ mm and the second part 2" is with length $L_2 = 500$ mm.

On the way of the flow W, right in front of the first part 2' of the measurement zone 2 stands a coarse filter 14 retaining particles over 5 mm, and right in front of the second part 2" of the measurement zone 2 stands a fine filter 15

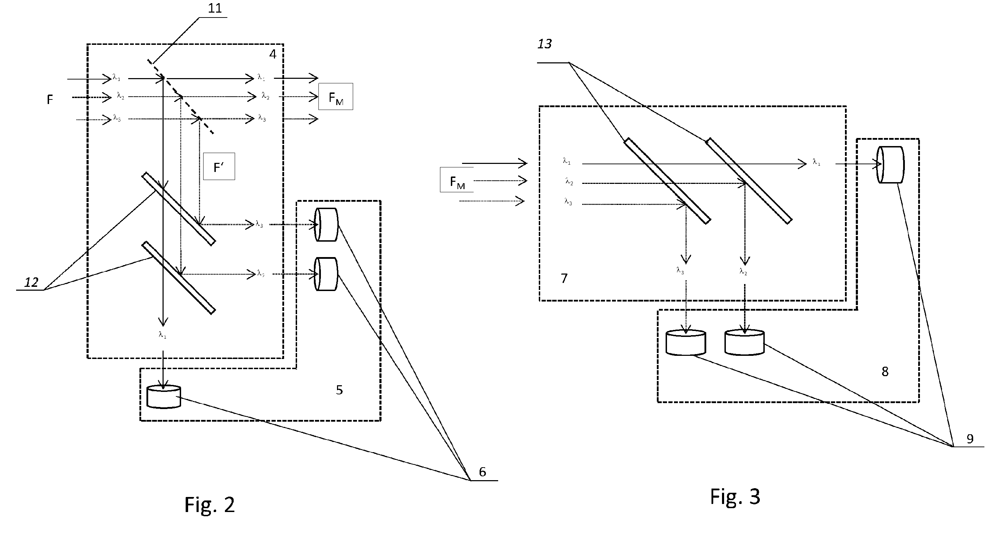

retaining particles over 10 $\mu m$. There is an input optical system 4 at the entry of the measurement zone 2 and an output optical system 7 at the exit. The input optical system 4 is illustrated in Figure 2. It includes a beam splitter 11 and dichroic mirrors at the entry 12 arranged one after the other in the direction of the reflected beam. The output optical system 7 is illustrated in Figure 3. In this embodiment the output optical system 7 includes two dichroic mirrors at the exit 13. The input optical system 4 is connected to an input measuring block 5 which in this embodiment includes 3 input detectors 6 to measure the input power $P_{oi}$ and the output optical system 7 is connected to an output measuring block 8 including 3 output detectors 9 for measuring the transmitted power $P_{ti}$. The input detectors 6 and the output detectors 9 are connected to a data acquisition and processing device 10.

In the funnel 3 directing the flow W to the measurement zone 2 there is a speed sensor 16 for measuring the speed of the water flow which is connected to the data acquisition and processing device 10.

The laser beam F passes through the input optical system 4, where the beam splitter 11 splits it into two beams with equal geometry and power - measuring beam $F_M$ and reflected beam F'. The measuring beam $F_M$ passes through the measurement zone 2. Dichroic mirrors at the entry and at the exit 12 and 13 split the measuring beam $F_M$ within each pulse to its constituent waves $\lambda_1$, $\lambda_2$ and $\lambda_3$. The input detectors 6 and the output detectors 9 measure, in this embodiment once per each pulse, respectively the input power $P_{01}$, $P_{02}$ and $P_{03}$ and the transmitted power $P_{t1}$, $P_{t2}$ and $P_{t2}$ for each wavelength. The information from the input and output detectors 6 and 9 is fed to the data acquisition and processing device 10. It contains a database of empirically determined calibration values for $A_{ij}$ for the respective wavelengths $\lambda_1$, $\lambda_2$ and $\lambda_3$ for particles of a specific polymeric material and size.

The absorption coefficient of the aqueous medium $K_{awi}$ for each wavelength is determined after a predefined mathematical model, the $K_{awi}$ value is recorded in the data acquisition and processing device 10 and is updated, in this embodiment, at one-second intervals. Based on the operative temporary data for the input power $P_{0i}$ and the transmitted power $P_{ti}$ for each wavelength $\lambda_1$, $\lambda_2$ and $\lambda_3$ and on the actual value for $K_{awi}$, the temporary value of the ratio $A_{ij}$ between the total coefficients of extinction $Q_{(\lambda 1)}$ and $Q_{(\lambda 1)}$ is determined for the three separate pairs of waves of different lengths, which is updated at a given time interval, in this embodiment - once per each pulse.

It is the conditional equivalent particle that is in the basis of the mathematical model for calculating the absorption coefficient of the aquatic medium $K_{awi}$ and the temporary values of $A_{ij}$. The conditional equivalent particle is a homogeneous and isotropic microparticle of polymeric material in the form of a cylinder with a height equal to the diameter $d_p$ of the base, which is irradiated along the normal to its base, i.e. the angle of incidence $\Theta$ is 0. For the conditional equivalent particle thus defined the optical length is $d_p$.

For the reflection coefficient $R_n$ at $\Theta=0$ the following relation is valid:

$$R_n(\theta_i = 0) = \left(\frac{n_p - n_w}{n_p + n_w}\right)^2$$

For the conditional equivalent particle the absorption in the measurement zone 2 is described by the Bear-Lambert relation:

$$P_t = P_o \cdot e^{-K_{attw}*L} \cdot (1 - \varphi \cdot Q_{ext})$$

$$\varphi = \frac{S_P}{S_F}$$

where , $Q_{ext}$ is the total coefficient of extinction, and the power transmitted through the water in the absence of a particle is

$$P_{tw} = P_o \cdot e^{-K_{aw}*L}$$

.

$$\frac{S_P}{S_F} = \left(\frac{d_p}{d_b}\right)^2$$

For the conditional equivalent particle

When $\varphi = 0$, i.e. in the absence of a particle in the measurement zone 2, $\frac{P_t}{P_{tw}} = 1$ . In this case $P_{tw}$ depends only on the water absorption coefficient $K_a$ in the measurement zone 2, where $K_a = 4.\pi.k/\lambda$. Respectively, $Q_{ext}$ can be determined for each temporary measurement for the respective wavelength by the formula:

$$Q_{ext}(\lambda_i) = \frac{1 - \frac{P_t}{P_{tw}}(\lambda_i)}{\left(\frac{d_p}{d_b}\right)^2}$$

$$Q_{ext} = \frac{\sigma_{ext}}{S_P}$$

From the relation , where $\sigma_{ext}$ is the extinction cross section for a particle of a specific material, which is in fact a measure of the ability of said substance to absorb, reflect and scatter electromagnetic radiation with the respective wavelength, it follows that the total coefficient of extinction for each wavelength $Q_{ext}$ is directly related to the extinction cross section $\sigma_{ext}$ and the cross-sectional area of the particle $S_p$. Therefore, the beam F includes at least two wavelengths emitted within the same pulse, i.e. at any one time the two wavelengths interact with the same cross section of the particle $S_p$.

Since for the ratio $A_{ij}$ between the total coefficients of extinction $Q_{ext}(\lambda_i)$ and $Q_{ext}(\lambda_j)$ for the different wavelengths

$$A_{i,j} = \frac{\sigma_{ext}(\lambda_i)}{\sigma_{ext}(\lambda_j)}$$

the relation is valid, it follows that $A_{ij}$ is unique for each particle of a specific material and of specific optical length, i.e. size.

When the value obtained for $A_{ij}$ is equal to or tends to 1 within the acceptable error of the input and output detectors 6 and 9, measuring the input and output power $P_o$ and $P_t$, this is an indication that the microparticle is not of plastic. A value for $A_{ij}$ other than 1 within the acceptable error of the measurement instruments is an indication that the passed microparticle can be defined as made from polymeric material.

At the set in the model maximum particle concentration, pulse repetition rate and number of measurements per pulse, the predominant number of measurements will be in a particle-free medium, which means that the predominant number of values for $P_{ti}/P_{oi}$ will be very close and tending to approach the maximum measured value. Based on these values the water absorption coefficient $K_{awi}$ for each wavelength can be calculated with sufficient accuracy. The defined coefficient is recorded and updated at a given interval, in this case every second.

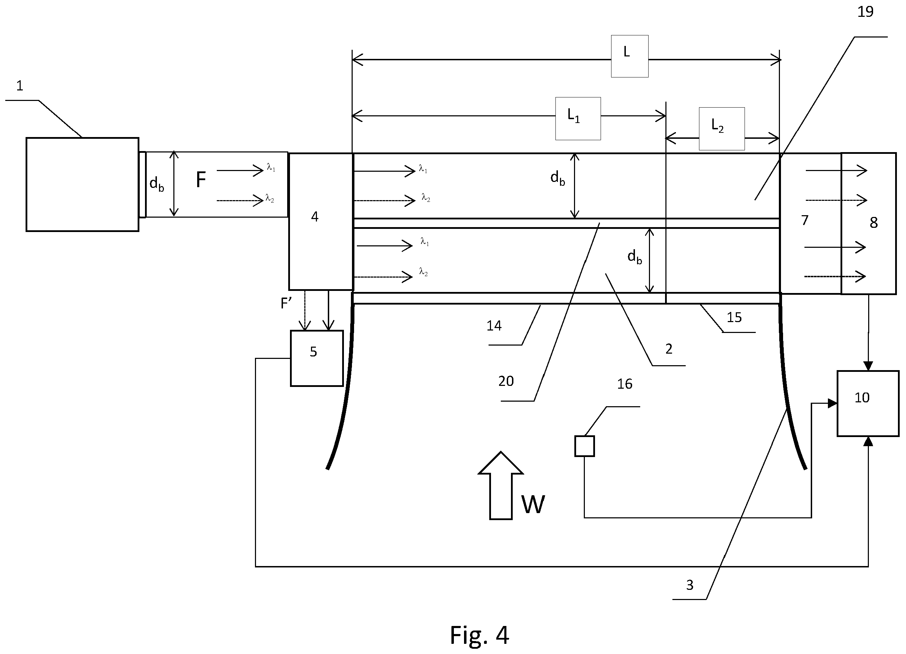

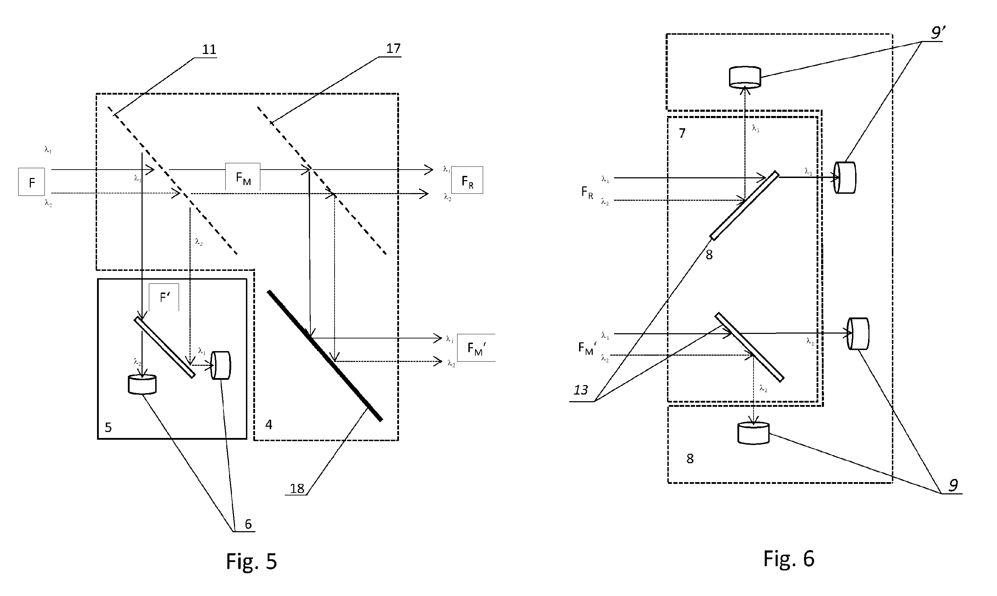

Figures 4-6 illustrate a variant embodiment of the method and device according to the invention. The device includes a funnel 3 for creating a fluid flow W with a speed sensor 16 for measuring the speed of water and a pulse laser 1 generating a pulse laser beam F. Chosen in this embodiment is a laser beam F with a diameter dp = 5.5 mm and with two waves of different lengths $\lambda1$ and $\lambda2$ in the range 450-700 nm. The length of each pulse is 50 ns, and the pulse repetition frequency is 20 kHz. The input optical system 4 is illustrated in Fig. 5. It includes a beam splitter 11 and a dichroic mirror at the entry 12 located in the direction of the reflected beam F'. The input optical system 4 includes also a second beam splitter 17 and a 100% reflective mirror 18. The second beam splitter 17 splits the beam FM which has passed through the beam splitter 11 into two beams FM' and FR both having equal geometric characteristics and equal input power. The beam FM' reflects in the 100% reflecting mirror 18 and passes through the measurement zone 2, and the beam FR irradiates the flow W, forming in it a reference zone 19 with diameter db and length L, the reference zone being located between the input optical system 4 and the output optical system 7 after the measurement zone 2 in the direction of water flow W.

The measurement zone 2 consists of two parts, in this embodiment the first part 2' is with length $L_1 = 600$ mm and the second part 2" is with a length $L_2 = 400$ mm.

Along the direction of the flow W, immediately in front of the first part 2' of the measurement zone 2 there is a coarse filter 14 retaining particles over 5 mm, and immediately in front of the second part 2" there is a fine filter 15 retaining particles over 10 $\mu m$. Immediately before the reference zone 19 there is a second fine filter 17 retaining particles above 10 $\mu m$.

The input and output optical systems 4 and 7 are connected to the input measuring block 5 and the output measuring block 8, respectively. The input measuring block 5 includes input detectors 6 for measuring the input power $P_{oi}$ in the measurement zone 2 and the reference zone 19. The output measuring block 8 includes output detectors 9 and 9' for measuring the transmitted power $P_{ti}$ and $P_{Rti}$ in the measurement zone 2 and the reference zone 19, respectively. The input measuring block 5, the output measuring block 8 and the speed sensor 16 are connected to data acquisition and processing device 10.

The laser beam F passes through the input optical system 4, where a beam splitter 11 divides it into two beams with the same geometric characteristics and, in this embodiment, the same power within each pulse - a measuring beam $F_M$ and a reflected beam F'. The measuring beam $F_M$ passes through the second beam splitter 17, which splits it into two beams $F_M$' and $F_R$ with the same geometric characteristics and the same power emitted simultaneously in each pulse. The beam $F_M$' reflects in 100% mirror 18 and passes through the measurement zone 2, and the beam $F_R$ passes through the beam splitter 17 and irradiates the reference zone 19. The coarse filter 14 retains particles above 5 mm, so the water in the first part 2" of the measurement zone 2 does not contain particles above this size. Thanks to the fine filter 15 and the second fine filter 20, the second part 2" of the measurement zone 2 and the reference zone 19 do not contain microparticles larger than 10 $\mu m$. The dichroic mirrors at the entry and the exit 12 split the reflected beam F' in each pulse to its constituent waves $\lambda_1$ and $\lambda_2$. The input detectors 6 measure the input power $P_{0i}$ for each wavelength in the measurement zone 2 and the reference zone 19, and the output detectors 9 measure the transmitted power $P_{t1}$ and $P_{Rti}$ for each wavelength in the measurement zone 2 and the reference zone 19, respectively. In this embodiment ten measurements are performed per each pulse. The information from the input and output detectors 6 and 9 is fed to the data acquisition and processing device 10, where it is processed and the results are recorded in the database and visualized on the display. The survey results can be transmitted in real time to mobile or stationary workstations - tablets, computers, smartphones wirelessly connected to the data acquisition and processing device.

USE OF INVENTION

The individual modules of the device according to the invention - laser, optical-measuring module, means for directing and measuring the water flow and computer, are transported to the water basin to be monitored. The assembly is done on the spot, the mode of assembling depends on the nature of the water basin. In surveys of open water medium the device is mounted on a specially designed floating platform provided with means for positioning and securing the modules of the device, and the platform is towed at a constant speed. When in the water environment there is no constant current in a given direction, the measurements are done while the platform is moving. In environments with a constant current, the platform is positioned towards the current's direction and the process of measurement begins. In surveys in closed industrial water infrastructures a water flow in the environment is generated and directed to the device. The device is powered by the civil electrical grid or a generator depending on the available options at the survey location. The device is calibrated before operation. The duration of operation of the device depends on the ability of uninterruptible power supply, the lifetime of the laser active zone and the particular survey design. It is preferable to use laser sources that provide at least 1000 work hours.

**Claims**

**1.** A method for evaluating the concentration, material and size of microplastics in aqueous medium comprising the following steps:

- a water flow W with a known constant speed is created;
- a measurement zone in a form of virtual cylinder with diameter $d_b$ and length L is created in the flow W, said measurement zone having a first part with length $L_1$ within the range 500-1500 mm and a second part L" with length $L_2 \geq 400$ mm, wherein the volume of the first part L' of said measurement zone is chosen so that no more than 3 microplastic particles pass through it within one second;
- a part of water in the flow W is filtered to remove the particles larger than 5 mm and fed to the first part of the measurement zone, and the other part of water in the flow W is filtered to remove the particles larger than 10 $\mu m$

and is fed into the second part of the measurement zone;

- through an input optical system located at the entry of the measurement zone the measurement zone is continuously irradiated with a pulse laser beam F with a diameter $d_b$;

- each pulse of the laser beam F contains n in number waves of different length $\lambda_i$, where $1 \leq i \leq n$, and $n \geq 2$ in the range 300-800 nm, the length of each pulse is less than 100 ns, and the pulse repetition frequency is at least 10 kHz;

- at the entry of the measurement zone the laser beam F is split into two beams with identical characteristics and a predetermined power ratio - a measuring beam $F_M$ which passes through the measurement zone, and a reflected beam F';

- in each pulse the reflected beam F' is split to its constituent waves $\lambda_i$, and at least one measurement is done within each pulse of the input power $P_{0i}$ for each single wavelength $\lambda_i$;

- at the exit of the measurement zone the measuring beam $F_M$ is split within each pulse to its constituent waves $\lambda_i$ and within each pulse at least one measurement of the transmitted power $P_{ti}$ is done for each single wavelength $\lambda_i$;

- the measured temporary values of the input power $P_{0i}$ and the transmitted power $P_{ti}$ are fed to a data acquisition and processing device, where according to a predefined mathematical model the temporary values of the ratio $A_{ij}$ between the total coefficients of extinction $Q_{ext}(\lambda i)$ and $Q_{ext}(\lambda_j)$ for each wavelength of each individual pair of waves with different lengths $\lambda_i$ are determined, whereas the ratios $A_{ij}$ are k in number, and k = n (n-1)/2, $1 \leq j \leq n$, $i \neq j$.

- the data acquisition and processing device contains a database of empirically determined calibration values for $A_{ij}$ for the respective pairs of wavelengths in the selected range for particles of a specific material substance and size.

- by comparing the determined temporary values for $A_{ij}$ for the microplastic particles passed through the measurement zone with the recorded calibration values for $A_{ij}$, the presence of microplastic particles of specific material and size is evaluated;

- the results of the comparisons are recorded in real time in the data acquisition and processing device and after subsequent statistical processing and analysis serve as calibration values for $A_{ij}$ in subsequent comparisons;

- after completion of the survey of the specific water medium according to a preset algorithm the concentration of microparticles in said medium is evaluated.

2. Method for evaluating the concentration, material and size of microplastics in aqueous medium according to claim 1, **characterized in that**.

- in parallel after the measurement zone a reference zone with the same geometrical characteristics as the measurement zone is provided;

- before entering the reference zone, the water is filtered to remove the particles larger than 10 $\mu m$ contained in the flow;

- the measuring beam $F_M$ is split into two parallel beams $F_M$' and $F_R$ with identical geometry and a predetermined power ratio within each pulse, wherein the beam $F_M$' passes through the measurement zone and the beam $F_R$ passes through the reference zone;

- at the entry and at the exit of the reference zone the input and transmitted power are continuously measured, wherein there is at least one measurement per every single pulse;

- the measured values of the input and transmitted power in the reference zone are fed to the data acquisition and processing device.

3. Device for evaluating the concentration, material and size of microplastics in aqueous medium, configured to carry out the method according to claim 1, comprising a source of pulsed coherent electromagnetic emission (1), generating a pulsed laser beam F, irradiating a measurement zone (2) of length L, a means (3) for directing a water flow W with a constant speed to the measurement zone (2) and an output optical system (7), located at the exit of the measurement zone (2) and connected to an output measuring block (8), including output detectors (9), connected to a data Acquisition and processing device (10), **characterized in that** the laser beam F has a diameter of $d_b \leq 6$ mm and n in number waves of different lengths $\lambda_i$, where $1 \leq i \leq n$, and $n \geq 2$, in the range 300-800 nm, the length of each pulse is less than or equal to 100 ns, and the pulse repetition frequency is at least 10 kHz, wherein the device also includes an input optical system (4) located at the entry of the measurement zone 2 and comprising a beam splitter (11) and n-1 in number dichroic mirrors at the entry (12) arranged one after the other in the direction of the beam F' which is reflected in the beam splitter (11), and said input optical system (4) is connected to an input measuring block (5) including n in number input detectors (6) for measuring the input power $P_{0i}$ connected to the data acquisition and processing device (10), wherein said output optical system (7) includes n-1 in number dichroic mirrors at the exit (13), said output detectors (9) meant for measuring the transmitted power $P_{ti}$, and wherein the measurement zone (2) consists of a first part (2') with a length $L_1$ in the range 500 -1500 mm, and a second part (2") with a length $L_2 \geq 400$ mm, and on the way of the flow W, right in front of the first part (2') of the measurement zone (2) there is a coarse filter (14) retaining particles over 5 mm, and immediately in front of the second part (2") of the measurement zone (2) there is a fine filter (15) retaining particles over 10 $\mu m$, wherein the means (3) for directing the flow W is provided with a speed sensor (16) for measuring the speed of the water flow which is connected to the data acquisition and processing device.

4. Device according to claim 3, **characterized in that** the input optical system (4) comprises a second beam splitter (17) located in the direction of the beam $F_M$ and splitting it into two beams $F_M$' and $F_R$ with equal geometric characteristics and a predetermined power ratio, and 100% reflecting mirror (18) reflecting the beam $F_M$, said beam $F_M$ irradiating the flow W and forming in it a reference zone (19) of length L located between the input and the output optical systems (4) and (7) after the measurement zone 2 in the direction of the fluid flow W, wherein a second fine filter (20) retaining particles above 10 $\mu m$ is provided in front of the reference zone (19).

5. Device according to claims 3 and 4, **characterized in that** the wavelengths emitted by the source of pulsed coherent electromagnetic emission (1) are in the range 450-800 nm.

6. Device according to claims 3 to 5, **characterized in that** $L_1$ is in the range 600-1200 mm and $L_2 \geq 500$ mm.

## Patentansprüche

1. Verfahren zur Bestimmung der Konzentration, des Materials und der Größe von Mikroplastik in wässrigem Medium, das die folgenden Schritte umfasst:

   - erzeugt wird fließender Strom W mit einer konstanten bekannten Geschwindigkeit erzeugt;
   - im Strom W wird eine Messzone gebildet, die einen virtuellen Zylinder mit einem Durchmesser $d_b$ und einer Länge L darstellt, bestehend aus einem ersten Teil mit einer Länge $L_1$ im Bereich von 500 - 1500 mm und einem zweiten Teil L" mit einer Länge $L_2 \geq 400$ mm. Das Volumen des ersten Teils L' der Messzone ist so gewählt, dass innerhalb einer Sekunde nicht mehr als drei Mikroplastikpartikel hindurchtreten;
   - ein Teil des Wassers im Strom W wird gefiltert, um die im Wasser enthaltenen Partikel mit einer Größe von mehr als 5 mm abzutrennen, und in den ersten Teil der Messzone geleitet. Der andere Teil des Wassers im Strom W wird gefiltert, um die darin enthaltenen Partikel mit einer Größe von mehr als 10 $\mu m$ abzutrennen, und in den zweiten Teil der Messzone geleitet;
   - durch ein optisches Eingangssystem, das am Eingang der Messzone angebracht ist, wird die Messzone kontinuierlich mit einem Impulslaserstrahl F mit Durchmesser $d_b$ bestrahlt;
   - jeder Impuls des Laserstrahls F enthält n-Wellen unterschiedlicher Länge $\lambda_i$, wo $1 \leq i \leq n$ ist, wobei a $n \geq 2$ im Bereich von 300-800 nm liegt. Die Länge jedes Impulses beträgt weniger als 100 ns und die Pulswiederholfrequenz - mindestens 10 kHz;
   - am Eingang der Messzone wird der Laserstrahl F in zwei Strahlen mit identischen Eigenschaften und einem vorgegebenen Leistungsverhältnis aufgeteilt - einen Messstrahl FM, der die Messzone durchläuft, und einen reflektierten Strahl F';
   - der reflektierte Strahl F' wird innerhalb jedes Impulses in seine Teilwellen $\lambda_i$ aufgeteilt, und innerhalb jedes Impulses wird für jede Wellenlänge $\lambda_i$ mindestens eine Messung der Eingangsleistung $P_{0i}$ durchgeführt;
   - am Ausgang der Messzone wird der Messstrahl $F_M$ innerhalb jedes Impulses in seine Teilwellenlängen $\lambda_i$ zerlegt, und innerhalb jedes Impulses wird mindestens eine Messung der durchgelaufenen Leistung $P_{ti}$ für jede Wellenlänge $\lambda_i$ durchgeführt;
   - die gemessenen Betriebswerte der Eingangsleistung $P_{0i}$ und der durchgelaufenen Leistung $P_{ti}$ werden einer Datenerfassungs- und -verarbeitungseinrichtung zugeführt, wo gemäß einem vordefinierten mathematischen Modell die Betriebswerte des Verhältnisses $A_{ij}$ zwischen den Gesamtdämpfungskoeffizienten $Q_{ext}(\lambda i)$ und $Q_{ext}(\lambda j)$ mindestens einmal pro Impuls für jede Wellenlänge jedes einzelnen Wellenpaars mit unterschiedlicher Länge $\lambda_i$ bestimmt werden, wobei die Anzahl der Verhältnisse $A_{ij}$ k beträgt, wo $k = n(n-1)/2$, $1 \leq j \leq n$, $i \neq j$.
   - die Datenerfassungs- und -verarbeitungseinrichtung enthält eine Datenbank mit empirisch ermittelten Kalibrierwerten für $A_{ij}$ für die entsprechenden Wellenlängenpaare aus dem ausgewählten Bereich für Partikel eines bestimmten Materials und einer bestimmten Größe;
   - durch Vergleich der berechneten Betriebswerte für $A_{ij}$ für die Mikroplastikpartikel, die die Messzone passiert haben, mit den aufgezeichneten Kalibrierwerten für $A_{ij}$ wird das Vorhandensein von Mikroplastikpartikeln eines bestimmten Materials und einer bestimmten Größe festgestellt;
   - die Ergebnisse der Vergleiche werden in Echtzeit im Datenerfassungs- und -verarbeitungsgerät aufgezeichnet und dienen nach anschließender statistischer Verarbeitung und Analyse als Kalibrierwerte für $A_{ij}$ in nach-

folgenden Vergleichen;
- Nach Abschluss der Untersuchung des konkreten wässrigen Mediums wird die Konzentration der Mikropartikel im Medium nach einem vorgegebenen Algorithmus bestimmt.

2. Verfahren zur Bestimmung der Konzentration, des Materials und der Größe von Mikroplastik in wässrigem Medium gemäß Anspruch 1, **dadurch gekennzeichnet, dass**

- parallel nach der Messzone eine Referenzzone mit denselben geometrischen Eigenschaften wie die Messzone eingerichtet wird;
- vor dem Eintritt in die Referenzzone das Wasser gefiltert wird, um die darin enthaltenen Partikel mit einer Größe von mehr als 10 $\mu m$ abzutrennen;
- der Messstrahl $F_M$ in zwei parallele Strahlen $F_M$' und $F_R$ mit identischen geometrischen Eigenschaften und einem vordefinierten Leistungsverhältnis innerhalb eines jeden Impulses aufgeteilt wird, wobei der Strahl $F_M$' die Messzone und der Strahl $F_R$ eine Referenzzone durchläuft;
- am Eingang und Ausgang der Referenzzone die Eingangs- und durchgelaufene Leistung kontinuierlich gemessen werden, wobei mindestens einmal pro Impuls gemessen wird;
- die gemessenen Werte der eingespeisten und der durchgelaufenen Leistung in der Referenzzone der Datenerfassungs- und - verarbeitungseinrichtung zugeführt werden.

3. Vorrichtung zur Bestimmung der Konzentration, des Materials und der Größe von Mikroplastik in wässrigem Medium nach dem Verfahren gemäß Anspruch 1, umfassend eine Quelle gepulster kohärenter elektromagnetischer Strahlung (1), die einen gepulsten Laserstrahl F generiert, der die Messzone (2) mit Länge L bestrahlt, eine Einrichtung (3) zum Lenken (F) eines fließenden Stroms W mit konstanter Geschwindigkeit zur Messzone (2) und ein optisches Ausgangssystem (7), das sich am Ende der Messzone (2) befindet und mit einer Ausgangsmesseinheit (8) verbunden ist, die Sensoren am Ausgang (9) umfasst, die mit einer Datenerfassungs- und -verar-beitungsvorrichtung (10) verbunden sind, **dadurch gekennzeichnet, dass** der Laserstrahl F einen Durchmesser $d_b \leq 6$ mm und n Wellen mit unterschiedlichen Längen $\lambda_i$ aufweist, wo $1 \leq i \leq n$, wobei $n \geq 2$ im Bereich von 300 - 800 nm ist, die Länge jedes Impulses kleiner oder gleich 100 ns ist und die Impulswiederholungsfrequenz mindestens 10 kHz beträgt, indem die Vorrichtung ferner ein optisches Eingangssystem (4) umfasst, das am Eingang der Messzone 2 angebracht und einen halbdurchlässigen Trennspiegel (11) und n-1 dichroitische Spiegel am Eingang (12) umfasst, die in Richtung des vom halbdurchlässigen Trennspiegel (11) reflektierten Strahls F' nacheinander angeordnet sind, wobei das optische Eingangssystem (4) mit einer Eingangsmesseinheit (5) verbunden ist, die n Sensoren am Eingang (6) zur Messung der Eingangsleistung $P_{0i}$ umfasst, die mit der Datenerfassungs- und -verar-beitungsvorrichtung (10) verbunden sind, und das optische Ausgangssystem (7) n-1 dichroitischen Spiegeln am Ausgang (13) umfasst, wobei die Sensoren am Ausgang (9) Sensoren zur Messung der Ausgangsleistung $P_{ti}$ sind, wobei die Messzone (2) aus einem ersten Teil (2') mit Länge $L_1$ im Bereich von 500 - 1500 mm und einem zweiten Teil 2" mit Länge $L_2 \geq 400$ mm besteht, indem sich auf Strömungsweg W unmittelbar vor dem ersten Teil (2') der Messzone (2) ein Grobfilter (14) befindet, der Partikel über 5 mm zurückhält, und unmittelbar vor dem zweiten Teil (2") der Messzone (2) ein Feinfilter (15) angebracht ist, der Partikel über 10 $\mu m$ zurückhält, wobei in der Einrichtung (3) zur Lenkung der Strömung W ein Sensor (16) zur Messung der Wassergeschwindigkeit vorgesehen ist, der mit der Datenerfassungs- und -verarbeitungseinrichtung verbunden ist.

4. Vorrichtung gemäß Anspruch 3, **dadurch gekennzeichnet, dass** das optische Eingangssystem (4) einen zweiten halbdurchlässigen Spiegel (17) umfasst, der in Richtung des Strahls $F_M$ angebracht ist und diesen in zwei parallele Strahlen $F_M$' und $F_R$ mit identischen geometrischen Eigenschaften und einem vorgegebenen Leistungsverhältnis aufteilt, sowie einen 100%-Spiegel (18), der den Strahl $F_M$' reflektiert, der den Fluss W bestrahlt und darin eine Referenzzone (19) mit Länge L bildet, die zwischen den optischen Eingangs- und Ausgangssystemen (4) und (7) nach der Messzone 2 entlang des Flusses W liegt. Vor der Referenzzone (19) befindet sich ein zweiter Feinfilter 20, der Partikel größer als 10 $\mu m$ zurückhält.

5. Vorrichtung gemäß Ansprüchen 3 und 4, **dadurch gekennzeichnet, dass** die von der Quelle gepulster kohärenter elektromagnetischer Strahlung (1) emittierten Wellenlängen im Bereich von 450 - 800 nm liegen.

6. Vorrichtung gemäß Ansprüchen 3 bis 5, **dadurch gekennzeichnet, dass** $L_1$ im Bereich 600 - 1200 m liegt und $L_2 \geq$ 500 mm ist.

**Revendications**

1. Méthode de détermination de la concentration, du matériau et de la taille des microplastiques dans un milieu aqueux, comprenant les étapes suivantes :

   - un flux W avec une vitesse constante connue est créé ;
   - une zone de mesure est formée dans le flux W, qui est un cylindre virtuel de diamètre $d_b$ et de longueur L, comprenant une première partie de longueur $L_1$ comprise entre 500 et 1500 mm et une seconde partie L" de longueur $L_2 \geq 400$ mm, où le volume de la première partie L' de la zone de mesure est choisi de manière à ce que pas plus de 3 particules microplastiques ne la traversent en une seconde ;
   - une partie de l'eau dans le flux W est filtrée pour éliminer les particules de plus de 5 mm contenues dans l'eau et acheminée vers la première partie de la zone de mesure, et l'autre partie de l'eau dans le flux W est filtrée pour éliminer les particules de plus de $10 \mu m$, contenues dans l'eau et acheminée vers la deuxième partie de la zone de mesure ;
   - par l'intermédiaire d'un système optique d'entrée situé à l'entrée de la zone de mesure, la zone de mesure est continuellement irradiée par un faisceau laser pulsé F d'un diamètre $d_b$;
   - chaque impulsion du faisceau laser F contient n nombre d'ondes de longueur différente $\lambda_i$, où $1 \leq i \leq n$, dans lequel cas a $n \geq 2$ dans la plage 300-800 nm, où la longueur de chaque impulsion est inférieure à 100 ns et la fréquence de répétition des impulsions est d'au moins 10 kHz;
   - à l'entrée de la zone de mesure, le faisceau laser F est divisé en deux faisceaux ayant les mêmes caractéristiques et un rapport de puissance prédéfini - un faisceau de mesure $F_M$, qui traverse la zone de mesure, et un faisceau réfléchi F' ;
   Le faisceau réfléchi F' est divisé à l'intérieur de chaque impulsion en ses ondes constitutives $\lambda_i$ et au moins une mesure est effectuée à l'intérieur de chaque impulsion de la puissance d'entrée $P_{0i}$ pour chaque longueur d'onde $\lambda_i$;
   - à la sortie de la zone de mesure, le faisceau de mesure $F_M$ est divisé, à l'intérieur de chaque impulsion, en ses ondes constitutives $\lambda_i$ et, à l'intérieur de chaque impulsion, au moins une mesure de la puissance transmise $P_{ti}$ est effectuée pour chaque longueur d'onde $\lambda_i$ ;
   - les valeurs opérationnelles mesurées de la puissance d'entrée $P_{0i}$ et de la puissance transmise $P_{ti}$ sont transmises à un dispositif de collecte et de traitement des données, où un modèle mathématique prédéfini est utilisé pour déterminer au moins une fois pour chaque impulsion les valeurs opérationnelles du rapport $A_{ij}$ entre les coefficients d'atténuation globaux $Q_{ext}(\lambda i)$ et $Q_{ext}(\lambda_j)$ pour chaque longueur d'onde de chaque paire d'ondes individuelle de longueur différente $\lambda_i$, les rapports $A_{ij}$ étant au nombre de k, où k=n(n-1) / 2, $1 \leq j \leq n$, $i \neq j$.
   - le dispositif de collecte et de traitement des données contient une base de données de valeurs d'étalonnage déterminées empiriquement pour $A_{ij}$ pour les paires de longueurs d'onde correspondantes de la gamme sélectionnée pour les particules d'un matériau et d'une taille particuliers ;
   - en comparant les valeurs opérationnelles calculées pour $A_{ij}$ pour les particules microplastiques qui ont traversé la zone de mesure avec les valeurs d'étalonnage enregistrées pour $A_{ij}$, la présence de particules microplastiques d'un matériau et d'une taille spécifiques est établie ;
   - les résultats des comparaisons sont enregistrés en temps réel dans le dispositif de collecte et de traitement des données et, après traitement et analyse statistique, servent de valeurs d'étalonnage pour $A_{ij}$ dans les comparaisons ultérieures ;
   - Une fois l'étude du milieu aqueux spécifique terminée, selon un algorithme défini, la concentration de microparticules dans le milieu est déterminée.

2. Méthode de détermination de la concentration, de la matière et de la taille des microplastiques dans un milieu aqueux selon la revendication 1, **caractérisée par le fait que**

   - une zone de référence ayant les mêmes caractéristiques géométriques que la zone de mesure est établie en parallèle après la zone de mesure ;
   - avant d'entrer dans la zone de référence, l'eau doit être filtrée pour éliminer les particules d'une taille supérieure à $10 \mu m$ ;
   - le faisceau de mesure $F_M$ est divisé en deux faisceaux parallèles $F_M$' et $F_R$ ayant les mêmes caractéristiques géométriques et d'un rapport de puissance prédéfini dans chaque impulsion, le faisceau $F_M$' traversant la zone de mesure et le faisceau $F_R$ traversant la zone de référence ;
   - à l'entrée et à la sortie de la zone de référence, la puissance d'entrée et la puissance transmise sont mesurées en continu, les mesures étant effectuées au moins une fois pour chaque impulsion ;
   - les valeurs mesurées de la puissance d'entrée et transmise dans la zone de référence sont transmises au dispositif de collecte et de traitement des données.

3. Un dispositif pour déterminer la concentration, la matière et la taille des microplastiques dans un milieu aqueux selon la méthode de la revendication 1, comprenant une source de rayonnement électromagnétique cohérent pulsé (1) générant un faisceau laser pulsé F, irradiant une zone de mesure (2) de longueur L, un moyen de guidage (3) d'un flux d'écoulement W de vitesse constante vers la zone de mesure (2), et un système optique de sortie (7) situé à l'extrémité de la zone de mesure (2) et connecté à une unité de mesure de sortie (8) comprenant des capteurs de sortie (9), reliés à un dispositif de collecte et de traitement des données (10), **caractérisé en ce que** le faisceau laser F a un diamètre $d_b \leq 6$ mm et n nombre d'ondes de longueur différente $\lambda_i$, où $1 \leq i \leq n$, où $n \geq 2$ dans la plage 300-800 nm, la longueur de chaque impulsion e inférieure ou égale à 100 ns, et la fréquence de répétition des impulsions est d'au moins 10 kHz, le dispositif comprenant en outre un système optique d'entrée (4) disposé à l'entrée de la zone de mesure 2 et comprenant un miroir semi-transparent séparateur (11) et un nombre n-1 de miroirs dichroïques à l'entrée (12), disposés les uns à la suite des autres le long de la direction du faisceau F' réfléchi par le miroir semi-transparent séparateur (11), le système optique d'entrée (4) étant relié à une unité de mesure d'entrée (5) comprenant n nombre de capteurs à l'entrée (6) pour mesurer la puissance d'entrée $P_{0i}$, qui sont couplés au dispositif de collecte et de traitement des données (10), et le système optique de sortie (7) comprend n-1 nombre de miroirs dichroïques de sortie (13), les capteurs de sortie (9) étant des capteurs destinés à mesurer la puissance de sortie $P_{ti}$, la zone de mesure (2) comprenant une première partie (2') ayant une longueur $L_1$, qui est dans la plage 500 -1500 mm, et une deuxième partie 2" ayant une longueur $L_2 \geq 400$ mm, dans laquelle un filtre grossier (14) retenant les particules supérieures à 5 mm est fourni dans le chemin du flux W immédiatement en amont de la première partie (2') de la zone de mesure (2), et immédiatement en amont de la deuxième partie (2") de la zone de mesure (2) se trouve un filtre fin (15) retenant les particules supérieures à $10 \mu m$, dans lequel cas un capteur (16) pour mesurer la vitesse de l'eau est prévu dans le dispositif (3) de guidage du flux W et est connecté au dispositif de collecte et de traitement des données.

4. Un dispositif selon la revendication 3, **caractérisé en ce que** le système optique d'entrée (4) comprend un deuxième miroir semi-transparent (17) disposé le long de la direction du faisceau $F_M$ et le divisant en deux faisceaux parallèles $F_M'$ et $F_R$ avec des caractéristiques géométriques identiques et d'un rapport de puissance prédéfini, et un miroir à 100 % (18) réfléchissant le faisceau $F_{M'}$ ; irradiant le flux W et y formant une zone de référence (19) de longueur L, située entre les systèmes optiques d'entrée et de sortie (4) et (7) en aval de la zone de mesure 2 sur le trajet du flux W, avec un second filtre fin 20 devant la zone de référence (19) retenant les particules supérieures à $10 \mu m$.

5. Un dispositif selon les revendications 3 et 4, **caractérisé par le fait que** les longueurs des ondes émises par la source de rayonnement électromagnétique cohérent pulsé (1) sont comprises entre 450 et 800 nm.

6. Un dispositif selon les revendications 3 à 5, **caractérisé par le fait que** $L_1$ est compris entre 600 et 1200 m et $L_{(2)} \geq 500$ mm.

Fig. 1

Fig. 3

Fig. 2

Fig. 4

EP 4 196 764 B1

Fig. 5

Fig. 6

Fig. 7

Fig. 8

$d_p=1mm$

$d_p=100\mu m$

$d_p=5mm$

$Q_{ext}$

$R_n$

$K_a\,[cm^{-1}]$

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10023000 A1

- WO 2017220249 A1

**Non-patent literature cited in the description**

- Optical transmission spectra study in visible and near-infrared spectral range for identification of rough transparent plastics in aquatic environments. **KA-NYATHARE BONIPHACE et al.** CHEMOSPHERE. PERGAMON PRESS, 30 January 2020, vol. 248